Europäisches Patentamt

European Patent Office

Office européen des brevets

(19)

(11) **EP 0 964 177 A2**

(12) **EUROPEAN PATENT APPLICATION**

(43) Date of publication:
15.12.1999 Bulletin 1999/50

(51) Int. Cl.⁶: **F16D 51/16**

(21) Application number: 99111141.0

(22) Date of filing: 08.06.1999

(84) Designated Contracting States:
AT BE CH CY DE DK ES FI FR GB GR IE IT LI LU
MC NL PT SE
Designated Extension States:
AL LT LV MK RO SI

(30) Priority: 10.06.1998 JP 16215998

(71) Applicant:
NISSHINBO INDUSTRIES INC.
Chuo-ku, Tokyo (JP)

(72) Inventor: Seiji, Asai
Okazaki-shi, Aichi-ken (JP)

(74) Representative:
Sajda, Wolf E., Dipl.-Phys. et al
MEISSNER, BOLTE & PARTNER
Postfach 86 06 24
81633 München (DE)

(54) **Drum brake device**

(57) It is an object of this invention to provide a drum brake device which improves the braking effectiveness and the pedal feeling. The pivot lever 14 is supported by the pivot type anchor 11 and the hollow protuberance 11c formed at either the shoe web 5 of the brake shoe 3 or the pivot lever 14 is fitted with the long hole formed along the circumferential direction on either one of the remaining devices, i.e., the shoe web 5 of the brake shoe 3 or the pivot lever 11; and the brake shoe 3 relative to the pivot lever 14 is rotatable and movable in the direction of the brake drum rotation.

Fig. 1

EP 0 964 177 A2

## Description

### BACKGROUND OF THE INVENTION

This invention relates to a drum brake device especially suitable for rear wheels. More specifically, this invention is a drum brake device which has a single brake shoe which operates as a leading shoe with a self-servo property when a vehicle is moving either forward or backward.

The applicant of this invention formally flied the Japanese patent applications which disclose drum brake devices in which a single brake shoe has a self-servo property when a vehicle is moving either forward or backward. The Japanese Patent Laid-Open No. H9-324829 discloses such a drum brake device with a single brake shoe, and the Japanese Patent Laid-Open No. H10-47396 discloses such a drum brake device with a pair of brake shoes.

That is, H9-324829 comprises a service brake actuator, a single brake shoe, a pivot lever pivotally supported with the central region of the brake shoe as the fulcrum, two anchors supporting both ends of brake shoe (one of the anchor is equipped with a shoe clearance adjustment device), and a parking brake actuator, wherein one end of the pivot lever functionally engages with both actuators and the other end is supported by the anchor, and the operation force of the service brake actuator or the parking brake actuator is transferred to the brake shoe via the pivot portion of the pivot lever.

H10-47396, in relative to H9-324829, the basic structure is almost the same except for a pair of brake shoes facing each other on which the pivot lever is rotatably pivoted and for a parking brake link mechanism provided between both pivot levers.

The above-described drum brake device has the following points to be improved.

〈A〉When in braking operation, a brake shoe and a pivot lever move together in the rotational direction of the brake drum, and either one end of the brake shoe is to be supported to cause a braking effect. Accordingly, the operation force of the actuator operates in the reverse direction when the brake drum is rotating in the direction to support the brake shoe at the anchor of the actuator side; therefore, the brakeing effectiveness (braking torque/actuator operation force) will be reduced.

〈B〉On a slope, after a vehicle being stopped by the service brake, the parking brake is activated to lock the vehicle. Very often, then, the driver tends to depress the braking pedal. At this stage, when the reverse rotational force, relative to the brake drum rotational direction, in the service brake operation, is caused due to the gravity of the vehicle created by the slop, the pivot lever moves together with the brake shoe until the brake shoe becomes supported by the other anchor, and the brake pedal position suddenly changes, which impairs the operational feeling.

### OBJECTS AND SUMMARY OF THE INVENTION

It is an object of this invention to provide a drum brake device which improves the braking effectiveness and the pedal action feeling at the same time.

The present invention is a drum brake device comprising a back plate, the first, second, and third anchors mounted on the back plate, a brake shoe, one end of which supported by one of the first or second anchor, the other end of which supported by the remaining first or second anchor, an actuator provided adjacent to the first anchor, and a pivot lever, the central region of which is rotatably supported at the central region of the brake shoe, one end of which functionally engages with the actuator, the other end of which supported by the third anchor, so that the operation force of the actuator may be transferred to the brake shoe via the pivot point of the pivot lever, wherein the other end of the pivot lever is supported by a pivot type anchor, and the brake shoe is pivotably supported on the pivot lever so as to be movable along the direction of brake drum rotation.

This invention further is a drum brake device as above, wherein the brake shoe is a single shoe and the pivot lever is a single lever.

This invention still further is a drum brake device as above, wherein a pair of brake shoes is facing each other, and a pair of pivot levers, each is pivoted with each brake shoe.

This invention still further is a drum brake device as above, wherein said actuator is a fluid type, a mechanical type, a dual type having both fluid and mechanical types, a one-side open type wheel cylinder, or a both-side open type wheel cylinder.

This invention still further is a drum brake device as above, wherein a protuberance is formed on one of a shoe web of the brake shoe or the pivot lever superimposed with the brake shoe and is to be protruding toward the other, a long hole is formed along the direction of brake drum rotation on the other or the pivot lever, and a mechanism for transferring the operation force of the actuator to the brake shoe via the pivot point consisting of the actuator, is transferred via the pivot point of the protuberance and the long hole.

This invention still further is a drum brake device as above, wherein the protuberance functioning as said mechanism for transferring the operation force of the actuator to the brake shoe is a hollow protuberance and a shoe hold pin functioning as a shoe hole mechanism is freely inlayed in a hollow of the hollow protuberance.

This invention still further is a drum brake device as above, wherein a hard spacer is provided on the force transferring surface of brake shoe of the mechanism for transferring the operation force of the actuator to the brake shoe.

This invention still further is a drum brake device as above, wherein a rotatable roller is provided around the protuberance of mechanism for transferring the operation force of the actuator to the brake shoe.

This invention still further is a drum brake device as above, wherein either the first anchor or second anchor functions as a shoe clearance adjustment device to adjust the clearance between the brake drum and the brake shoe.

This invention still further is a drum brake device as above, wherein the shoe clearance adjustment device comprises an automatic shoe clearance adjustment device which senses the amount of opening of the brake shoe to automatically adjust the clearance.

This invention yet further is a drum brake device as above, wherein the moment of the shoe return spring acting on the brake shoe with the pivot point of the brake shoe and the pivot lever as the fulcrum, is so designed that the rotation-entry side of the brake shoe opens first relative to the forwarding direction of the brake drum.

BRIEF DESCRIPTION OF THE DRAWINGS

The above and the other objects and the attendant advantages of the present invention will become readily apparent by reference to the following detailed description when considered in conjunction with the accompanying drawings wherein:

Figure 1 is a plan view of the drum brake device in Embodiment 1 of this invention;
Figure 2 is a cross-section view of Figure 1 taken along the line II-II;
Figure 3 is a cross-section view of Figure 1 taken along the line III-III;
Figure 4 is a cross-section view of Figure 1 taken along the line IV-IV;
Figure 5 is a cross-section view of Figure 4 taken along the line V-V;
Figure 6 is a cross-section view of Figure 1 taken along the line VI-VI;
Figure 7 is a model view to explain the moment acting on the brake shoe;
Figure 8 is a cross-section view of Figure 1 taken along the line VIII-VIII;
Figure 9 is an explanation view of the drum brake device relating to Embodiment 2 and is a cross-section view of other type of pivot point of the brake shoe and the pivot lever;
Figure 10 is an explanation view of the drum brake device relating to Embodiment 2 and is a cross-section view of another type of pivot point of the brake shoe and the pivot lever;
Figure 11 is a plan view of the drum brake device relating to Embodiment 3 of this invention;
Figure 12 is a plan view of the adjustment lever;

Figure 13 is a cross-section view of Figure 11 taken along the line XIII-XIII;
Figure 14 is a plan view of the drum brake device of Embodiment 4:
Figure 15 is a cross-section view of Figure 14 taken along the line XV-XV;
Figure 16 is an enlarged plan view of the lower portion of the drum brake in Figure 14; and
Figure 17 is a cross-section view of Figure 16 taken along the line XVII-XVII.

DETAILED DESCRIPTION OF PREFERRED EMBODIMENTS

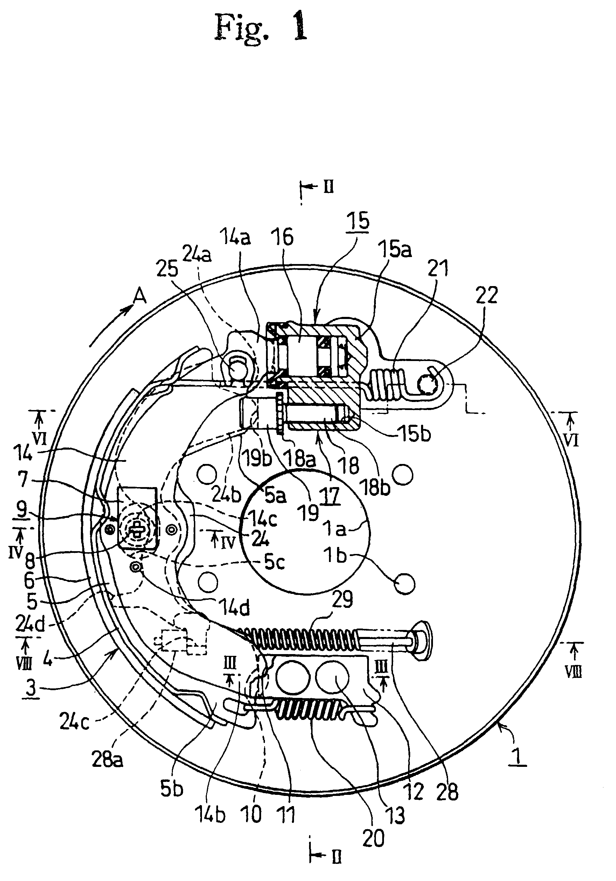

Embodiments of this invention are explained with reference to Figures 1-8. In these embodiments, the drum brake device illustrated is an example of the one used at the right rear wheel of the vehicle. In these embodiments, terms such as "right left" or "upper lower" may be used to explain more efficiently; however, the location of drum brake device is not restricted to be provided in the specifically indicated here.

Embodiment 1

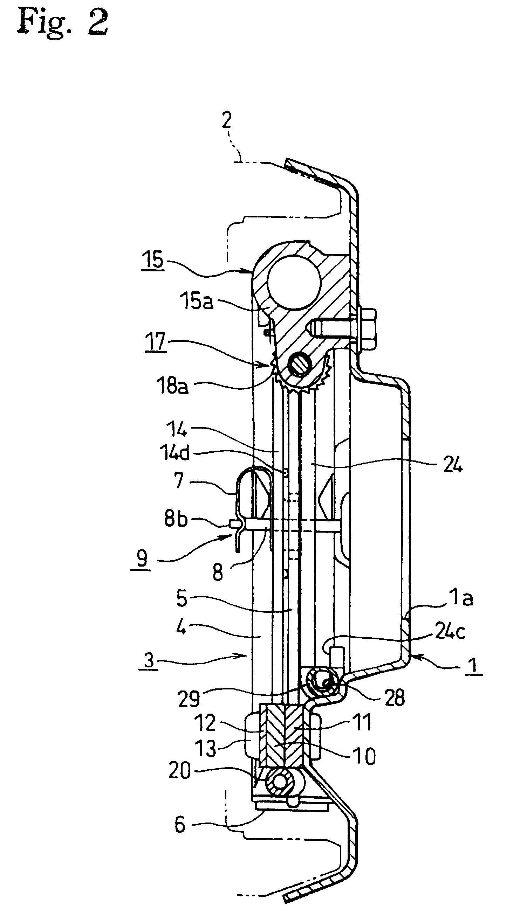

In Figures 1 and 2, the central hole 1a of the back plate 1 is freely inlayed with the vehicle axle, and bolts, not shown in the diagram, is screwed into four bolt holes 1b; therefore, the back plate is fixed to the vehicle body.

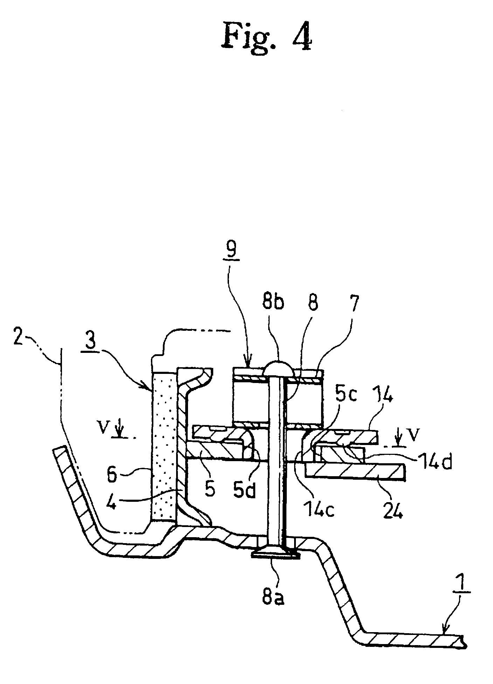

The reference number 3 is a single brake shoe where the shoe rim 4 is jointed to the shoe web 5 to form a "T" in cross section, and the lining 6 is affixed around the perimeter of the shoe rim 4. The brake shoe 3 causes a braking effect by frictionally engaging with the brake drum 2 shown as a chain double-dashed line in Figures 2 and 4.

The brake shoe 3 is so designed that the upper end (one end) 5a of the shoe web 5 abuts against the first anchor 17 also functioning as a shoe clearance adjustment device and that the lower end (the other end) 5b abuts against the second anchor 10 fixed on the back plate 1. Then, the brake shoe 3 is installed by the shoe holding device 9 comprising the publicly known plate spring 7 and the shoe hold pin 8.

The shoe hold pin 8 instead of bolts, one side of which may be fixed on the back plate 1 and the upper and lower nuts may be placed on the other side of the shoe hold pin 8 so that the brake shoe 3 and the pivot lever 14 are movably caught between the upper and lower nuts.

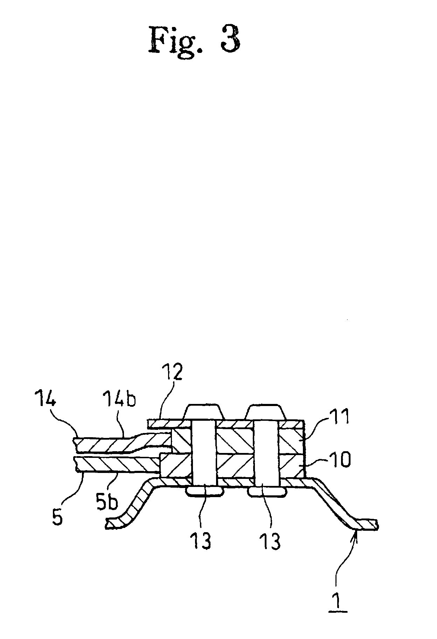

The lower anchor is explained with reference to Figure 3. The second anchor 10 and the third anchor 11 are superimposed on the raised segment of the back plate 1, and the retaining plate 12 is superimposed on the surface side of the third anchor 11, all of which are fixed together on the back plate 1 by the rivets 13, 13.

The side end surface of the second anchor 10 supporting the lower end 5b of the shoe web 5 is a plane shape to support as a floating anchor type. The side end surface of the third anchor 11 supporting the lower end 14b of the pivot lever 14 is an arc shaped surface (pivot shape) to support as a pivot anchor.

The brake shoe 3 is so designed that the upper and lower ends 5a, 5b of the shoe web 5 are to be floating anchor type; however, one or both ends may be designed to be a pivot anchor type. Further, the second anchor 10 and the third anchor 11 may be integrally formed, and the retaining plate 12 may be added to be integrated by forging or casting, etc.

The pivot lever 14 is superimposed on the surface side of the shoe web 5. The wheel cylinder 15 is a one-side open type and is a fluid pressure type actuator for a service brake, which may be either a hydraulic type or air type.

The upper end 14a of the pivot lever 14 engages with the piston 16 of the wheel cylinder 15, and the lower end 14b of the pivot lever 14 abuts against the third anchor 11 so as to pivotably and vertically slide.

The central region of the brake shoe 3 and the pivot lever 14 is rotatable and is pivoted to be able to make a relative movement in the direction of the brake drum 2 rotation (Figures 2 and 4); therefore, the operation force of the wheel cylinder of the service brake actuator is transferred to the brake shoe 3 via the pivot portion of the pivot lever 14.

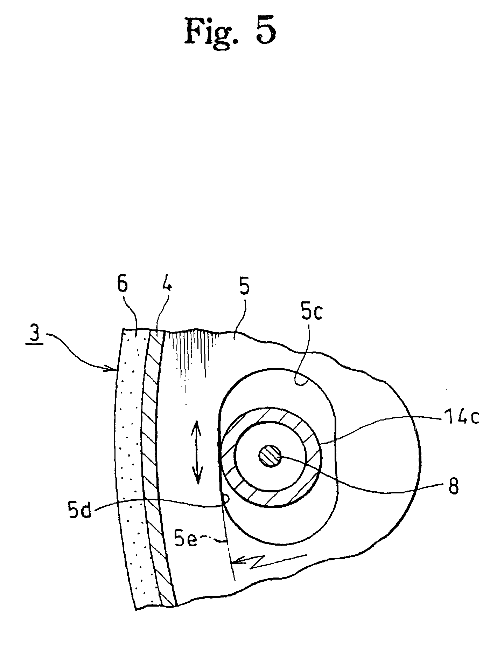

The structure of the pivot portion (force transferring mechanism) is explained with reference to Figures 4 and 5. The hollow protuberance 14c integrally formed at the central region of the pivot lever 14 freely fits in the long hole 5c which is long in the direction of the brake drum rotation formed at the shoe web 5. Then, the projections 14d formed around the perimeter of the hollow protuberance 14c are slidably connected with the shoe web 5.

Although not shown in the diagram, the long hole may be formed at the pivot lever 14 side and the protuberance may be formed at the shoe web 5 side to be pivoted, and another pin may be easily used instead of the hollow protuberance 14c.

As shown in Figure 5, the long hole 5c is formed in an arc shape with the brake center as a radius. This is to enable the brake shoe 3 and the pivot lever 14 to make the relative movement between the long hole 5c and the hollow protuberance 14c fitted with the long hole 5c in the direction of the brake drum 2 rotation (in the direction of arrow in the diagram).

The long hole 5c is at least so designed that the force transferring surface 5d of the outer side of the brake is the arc shape 5e with the brake center as the radius and that the shape of the surface facing the force transferring surface 5d of the long hole 5c is not limited to what is described here.

Figure 4 illustrates the cross-section of the pivot portion of the pivot lever 14 and the brake shoe 3. The shoe hold pin 8 where the head 8a is interlocked in the hole of back plate 1 penetrates through the hollow protuberance 14c of the pivot lever 14 and the plate spring 7 on the pivot lever 14 respectively, and the hooking portion 8b engages with the plate piece of the upper side of the plate spring 7; therefore, the pivot lever 14 is elastically supported at the shoe web 5.

In Figure 1, the shoe clearance adjustment device to adjust the clearance between the brake drum and the lining 6 comprises the adjustment bolt 18 screwed into the cylinder body 15a of the wheel cylinder 15 and the sleeve 19 fitted around the left side of the adjustment bolt 18 so as to relatively rotate.

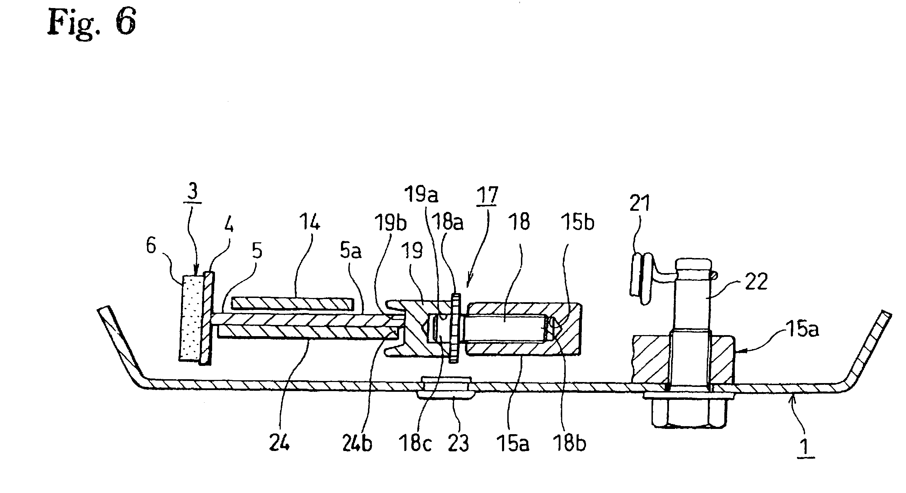

The shoe clearance adjustment device 17 is explained with reference to Figure 6. The female thread 15b is formed in the hole formed parallel to the cylinder body 15a of the wheel cylinder 15, and the axle 18b of right side of the adjustment bolt 18 is screwed into the hole. The central region of the adjustment bolt 18 has the adjustment toothed wheel 18a. The axle 18c of the left side of the adjustment bolt 18 is rotatably fitted in the hole 19a of the sleeve 19.

The notched groove 19b is formed at the left end of the sleeve 19, and the end surface of the upper end 5a of the shoe web 5 abuts against the bottom surface of the notched groove 19b, and the middle segment 24b of the later-described brake lever 24 is provided with a slight clearance.

When adjusting the clearance between the lining 6 and the brake drum 2, the plug 23 is removed, then an equipment such as a screw driver may be inserted from outside of the brake to rotate the adjustment toothed wheel 18a to screw out or in the adjustment bolt 18 to manually adjust the above-described clearance.

In Figure 1, the first shoe return spring 20 is extended between the lower end 5b of the shoe web 5 and one portion of the retaining plate 12. The second shoe return spring 21 is extended between the upper end of the shoe rim 4 and the bolt 22 fastening the wheel cylinder 15 to the back plate 1.

The first and second shoe return springs 20, 21 are extended to satisfy the following relation.

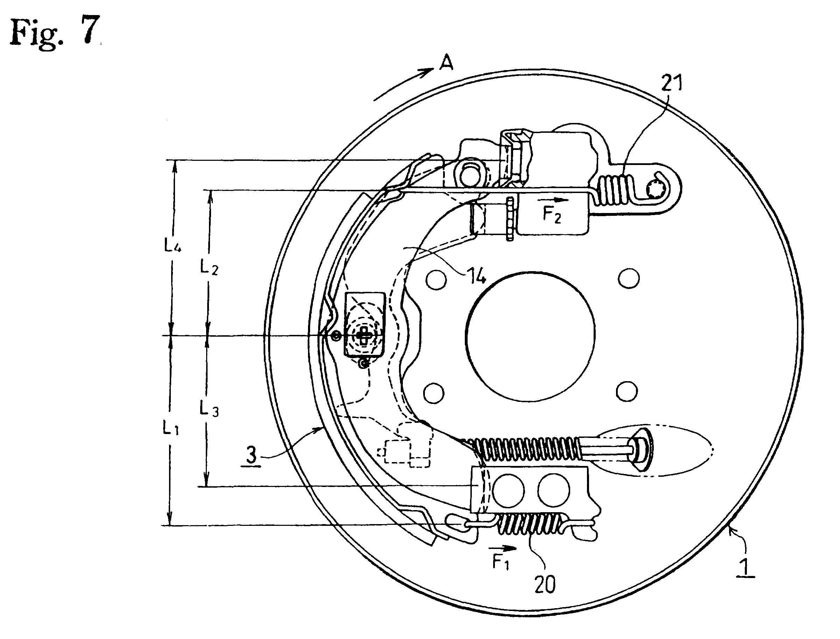

In Figure 7:

$F_1$ = mounted load of the first shoe return spring 20;
$F_2$ = mounted load of the second shoe return spring 21;
$L_1$ = distance between the pivot point of the brake shoe 3 with the pivot lever 14 and the first shoe return spring 20; and
$L_2$ = distance between the pivot point of the brake shoe 3 with the pivot lever 14 and the second shoe return spring 21.

When the brake drum is advancing forward (in the direction of arrow A), the moment acting on the brake shoe 3 is designed to be $F_1 \times L_1 < F_2 \times L_2$.

The moment of the shoe return spring acting on the brake shoe 3 with the pivot point of the brake shoe 3 and the pivot lever 14 as the fulcrum is set so that the rotation-exit side of the brake shoe 3 is lager than the moment of the rotation-entry side of the brake shoe relative to the rotation direction A of the brake drum; therefore, the brake shoe 3 is designed to always be opened first.

The rotation-exit side of brake shoe 3 does not depart prior to the rotation-entry side of brake shoe 3 relative to the rotational direction A of the brake drum when moving forward which is an overwhelmingly more frequent way of use, thereby eliminating the impact load which prevents an impact noise.

Even when the brake lever 24 is preset to slightly be pulled (in the condition that the brake shoe 3 is slightly opened), the rotation-exit side of the brake shoe 3 does not depart from the first anchor 17 and no dragging is caused in addition to the above-identified effects.

Next, the mechanical link type actuator for the parking brake actuator, which is a component for two channels brake, for the safety reason, is explained next.

In Figure 1, the forward-pull type brake lever 24 is superimposed under the shoe web 5; the end 24a is pivotably mounted on the upper end 14a of the pivot lever 14 with the pin 25 as the fulcrum; the adjacent middle segment 24b engages with the bottom of the notched groove 19b with a slight clearance (see Figure 6); and the free end is bent to form the U-shaped groove 24c. The stopper 24d restricts the returning position of the brake lever 24 and abuts against the inner surface of the shoe rim 4 to restrict the returning position.

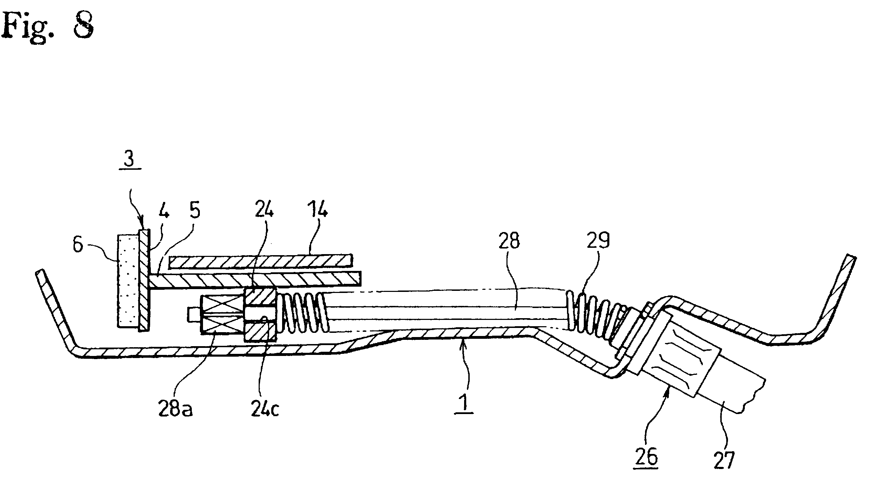

In Figure 8, the reference number 26 is a remote control parking brake cable. One end of the outer casing 27 is fixed to the back plate 1, and the end nipple 28a fixed at one end of the inner cable 28 is engaged with the U-shaped groove 24c of the brake lever 24.

The compression coil spring 29 surrounds the inner cable 28 and is contracted between the outer casing 27 and the U-shaped groove 24c, which presses back the brake lever 24 and the inner cable 28 and prevents the wear by letting the inner cable 28 slide on the back plate 1.

Further, the above-described actuator for the service brake and the parking brake may be used separately. Also, the wedge type actuator which has a wedge type operation rod instead of the fluid type wheel cylinder 15, and a cross-pull type actuator which connects the parking brake cable 26 at outside of the brake instead of the forward-pull type brake lever 24, or many other variation is applicable. Brake Operation

〈A〉Service Brake Operation

In Figure 1, when the wheel cylinder 15 is pressurized, the piston 16 presses the upper end 14a of the pivot lever 14. The pivot lever 14 opens with the point of abutment against the third anchor 11 supporting the lower end 14b as the fulcrum.

The opening force operated on the pivot lever 14 is transferred to the brake shoe 3 via the pivot portion of the hollow protuberance 14c and the long hole 5c.

The lower end of the brake shoe 3 (the lower end 5b of the shoe web 5) never fails to open first to frictionally engage with the brake drum 2 (Figures 2 and 4) to brake by the difference of the moment operating on the brake shoe 3 by the shoe return springs 20 and 21 with the pivot point with the pivot lever 14.

To explain the braking operation more detail, if the rotation force of the brake drum 2 operates on the brake shoe 3, the hollow protuberance 14c allows the relative movement along the force transferring surface 5d of the long hole 5c; the brake shoe 3 separately and smoothly moves relative to the pivot lever 14; and the upper end 5a is supported by the shoe clearance adjustment device 17, the first anchor, thereby causing a braking force on the brake shoe 3.

As evident from above, the operation force on the brake shoe 3 may easily be changed by the ratio of the distance L3 from the pivot point of the pivot lever 14 to the supporting point of the lower end 14b side and the distance L4 from the pivot point to the operation point, i.e., the lever ratio $(L3 + L4)/L3$ of the pivot lever 14. (See Figure 7)

In Figure 1, since the brake drum when moving forward rotates in the direction of arrow A, the upper end 5a of the shoe web 5 is supported by the shoe clearance adjustment device 17 of the first anchor, thereby functioning as a leading shoe with a self-servo property. At that time, even when the operation force of the wheel cylinder 15 relative to the rotation force of the brake drum operates in the reverse direction, the lower end 14b of the pivot lever 14 is supported so as not to be movable and the brake shoe 3 moves alone in the direction of the brake drum rotation; therefore, the braking effectiveness is not decreased.

Further, the upper end 5a of the shoe web 5 when in moving forward always abuts against the first anchor 17, and the rotation-exit relative to the rotational direction of the brake drum does not separate, which provides an advantage in its strength without the impact load and eliminates an impact noise.

When the brake drum is rotating in the reverse direction of arrow A to move backward, the lower end 5b of the shoe web 5 is supported by the second anchor 10 and functions as a leading shoe with a self-servo property as when in moving forward. At this time, the brake shoe 3 moves alone regardless of the pivot lever 14, and the operation force of the wheel cylinder 15 does not cause a bad influence on braking effectiveness.

〈B〉Parking Brake Operation

As in Figure 1, for example, the inner cable 28 is pulled by operating a hand brake lever, not shown in the diagram, within the vehicle. As the inner cable 28 is pulled, the brake lever 24 rotates counter-clockwise in Figure 1 with the pivot point at the point of abutment of the middle segment 24b and the sleeve 19 as the fulcrum, and the upper end 14a of the pivot lever 14 is pressed in the direction of opening via the pin 25.

As a result, the pivot lever 14 opens with the pivot point at the point of abutment with the lower end 14b of the third anchor 11.

The operation force of the parking brake, as same as the service brake operation, operates on the brake shoe 3 via the pivot point of the pivot lever 14 and the brake shoe 3 after directly operating on the pivot lever 14, and the lower end 5b side of the brake shoe opens first to frictionally engage with brake drum.

As explained above, when in the service brake or parking brake operation, the operation force of the wheel cylinder 15 and brake lever 24 operate on the pivot lever 14 and the brake shoe 3, then the brake shoe 3 alone slides in the direction of the brake drum 2 rotation on the pivot lever 14 and is supported either by the shoe clearance adjustment device 17, the first anchor, or the second anchor 10, thereby creating a braking force as a leading shoe when in moving forward or backward.

As is evident from the above-description, besides that the parking brake operation has the same operational effect as the service brake operation, when the vehicle is stopped on a slope by the service brake, and the parking brake is activated to lock, and then the braking pedal force is gradually released, even if the brake shoe 3 rotates in the reverse direction until being supported by the other anchor (the first anchor 17 or the second anchor 10) by the gravity of the vehicle, the pivot lever 14 is always maintained in the fixed position., thereby causing no sudden change on pedal position, which maintains the pedal operation feeling.

Embodiment 2

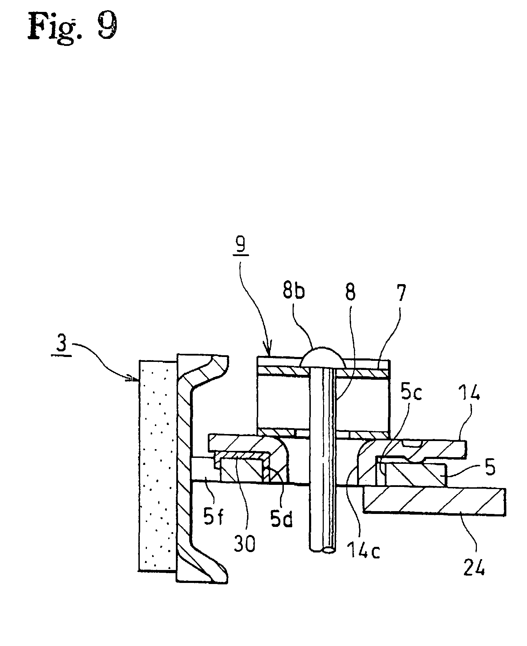

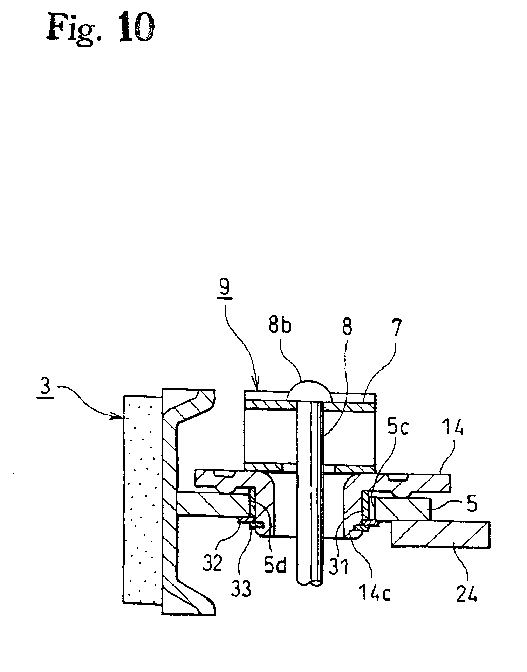

Figures 9 and 10 illustrate another embodiment where a hard material is placed between the hollow protuberance 14c and the long hole 5c to transfer the operation force of the first actuator. In the first embodiment, since the contact of both parts is a line contact, the force transferring surface 5d of the long hole 5c may be the permanent set. Hardening is one way to eliminate this; however, a material of the shoe web 5a must be an expensive high-carbon iron, which may be inconvenient.

Figure 9 illustrates the spacer 30 placed between the notched groove 5f formed at the outer circumference of the shoe web 5 and the long hole 5c. The spacer 30 is an almost reverse-U shaped device which is made of a hard material. One facing end of the spacer 30 is placed on the force transferring surface 5d of the long hole 5c, and the part placed between the shoe web 5 and the pivot lever 14 elastically attaches by the plate spring 7.

In this embodiment, the durability is improved by preventing the permanent set of the sliding portion and the brake shoe 3 slides smoothly by reducing the sliding resistance of the pivot portion.

In addition, contrary to the embodiment shown in the diagrams, when the protuberance may be provided at the shoe web 5 side and the long hole is formed at the pivot lever 14 side, the spacer 30 attaches the pivot lever 14 side.

Figure 10 illustrates an embodiment where the roller 31 is rotatably provided on the exterior of the hollow protuberance 14c of the pivot lever 14. The roller 31 is a tube, the outer surface abuts against the force transferring surface 5d, and the roller 31 is installed by the washer 32 and the stop ring 33 to prevent from falling from the hollow protuberance 14c.

In this embodiment, the roller 31 rotates when the brake shoe 3 moves; therefore, the resistance at the contacting portion to make the brake shoe slides smoother and the durability is improved.

Contrary to the embodiment illustrated in the diagrams, even when the protuberance may be provided at the shoe web 5 side and the long hole is formed at the pivot lever 14 side, the roller 31 may be provided on the exterior of the protuberance at the shoe web 5 side.

In addition, the roller 31 and the spacer 30 may be used together, and grease may be applied on the sliding portion of both devices with the relative movement and/or the rotating portion.

Embodiment 3

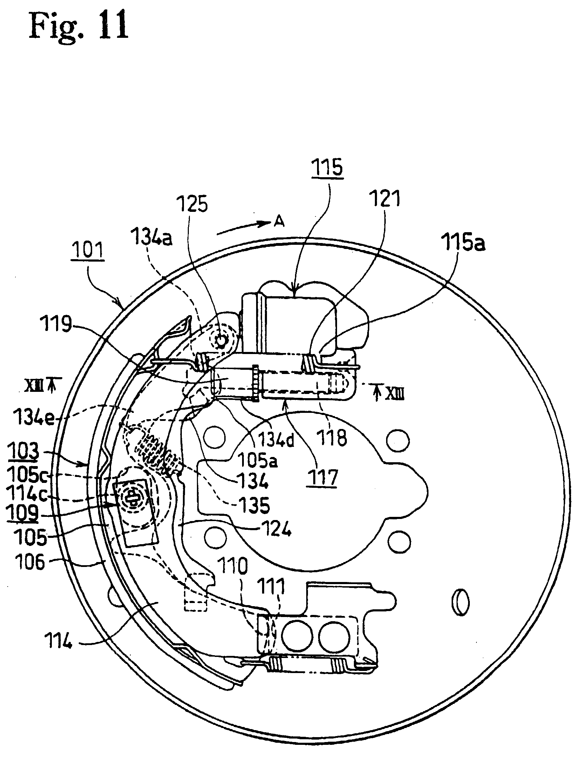

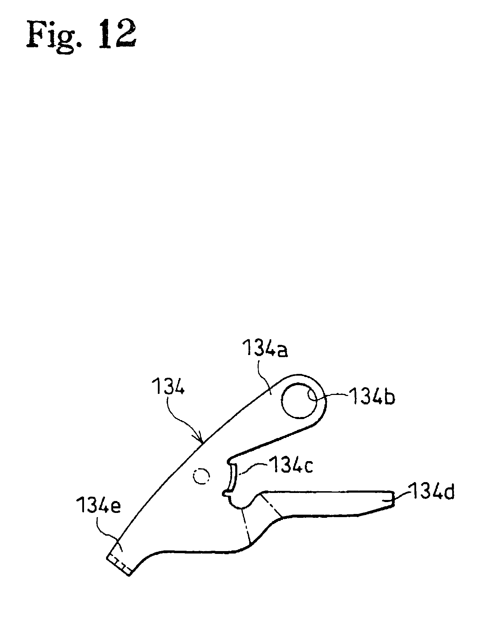

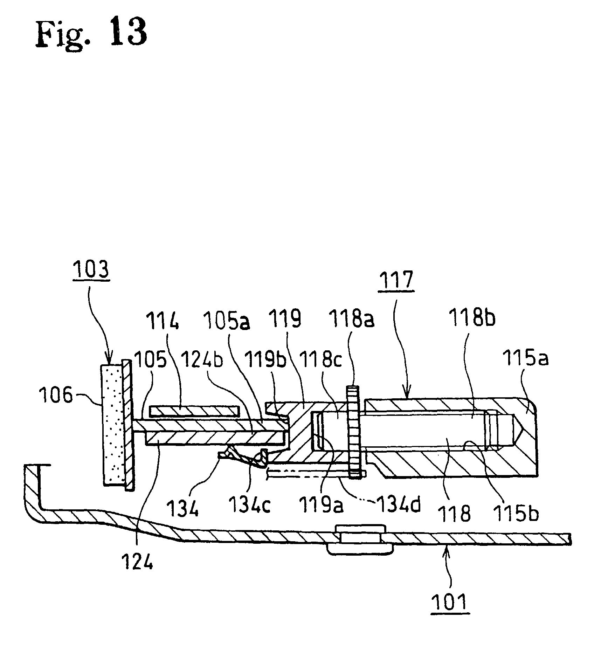

Figures 11-13 illustrate another embodiment of the drum brake device suitable for comprising the automatic shoe clearance adjustment function. In explaining this embodiment, those components which are the same as in Embodiments 1 and 2 are identified with a 100-series of numbers, for which a detailed explanation is omitted here..

⟨A⟩ Shoe Clearance Adjustment Device

The shoe clearance adjustment device 117 also functioning as the first anchor comprises the adjustment bolt 118 screwed into the cylinder body 115a of the wheel cylinder 115 and the sleeve 119 fitted around the left side of the adjustment bolt 118.

The adjustment bolt 118 has the adjustment toothed wheel 118a at that central region, and the axle 118b at that right side is screwed into the female thread 115b of the cylinder body 115a. Then, the axle 118c of the left side of the adjustment bolt 118 rotatably fits in the hole 119a of the sleeve 119.

The notched groove 119b at the left side of the sleeve 119 holds the upper end 105a of the shoe web 105 and the middle segment 124b of the brake lever 124, and the bottom of the notched groove 119b supports the upper end 105a of the shoe web.

In addition, the second shoe return spring 121 extends between the cylinder body 115a and the brake shoe 103.

Braking operation and the manual shoe clearance adjustment operation are same as the above-described operation; therefore, the explanation is omitted here.

⟨B⟩ Automatic Shoe Clearance Adjustment Device

The adjustment lever 134 is formed in an almost Y-shape and is provided at the back plate 101 side of the brake lever 124. The hole 134b at the end portion of the first arm 134a is rotatably supported with the pin 125 which pivotally supporting the brake lever 124 on the pivot lever 114 as the fulcrum.

The middle segment 134c of the adjustment lever 134 abuts against the end surface of the sleeve 119 and the second arm 134d engages with the adjustment toothed wheel 118a. The adjustment spring 135 extends between the third arm 134e of the adjustment lever 134 and the brake lever 124, which applies a counter-clockwise spring force to the adjustment lever 134 with the pin 125 as the fulcrum.

⟨C⟩ Automatic Shoe Clearance Adjustment Operation

The service brake is applied to open the pivot lever 114 with the third anchor 111 as the fulcrum, and the pin 125 moves together. At this time, since the middle segment 134c of the adjustment lever 134 is pressed toward the end surface of the sleeve 119 by the spring force of the adjustment spring 135, the second arm 134d rotates counter-clockwise.

Then, if the lining 106 wears out; the amount of opening of the pivot lever 114 increases; and the degree of rotation of the second arm 134d of the adjustment lever 134 exceeds the intertooth pitch of the adjustment toothed wheel 118d, the adjustment toothed wheel 118a is rotated to screw the adjustment bolt 118 out from the cylinder body 115a, and the clearance between the brake drum, not shown in the diagram, and the lining 106 is automatically adjusted to maintain the constant clearance.

Further, when the parking brake is in operation, the thrust force of the shoe clearance adjustment device 117 increases by the operation force of the brake lever 124. Here, not sufficient adjustment spring 135 force is applied to overcome the trust force, and the clearance adjustment operation is not conducted.

When in service brake or parking brake in operation, after the operation force of the wheel cylinder 115 or brake lever 124 operates on the pivot lever 114, the brake shoe 103 slides alone in the direction of the brake drum rotation on the pivot lever 114 and is supported by either the shoe clearance adjustment device 117, the first anchor, or the second anchor 110, thereby creating the braking force as a leading shoe as already explained in Embodiments 1 and 2.

Embodiment 4

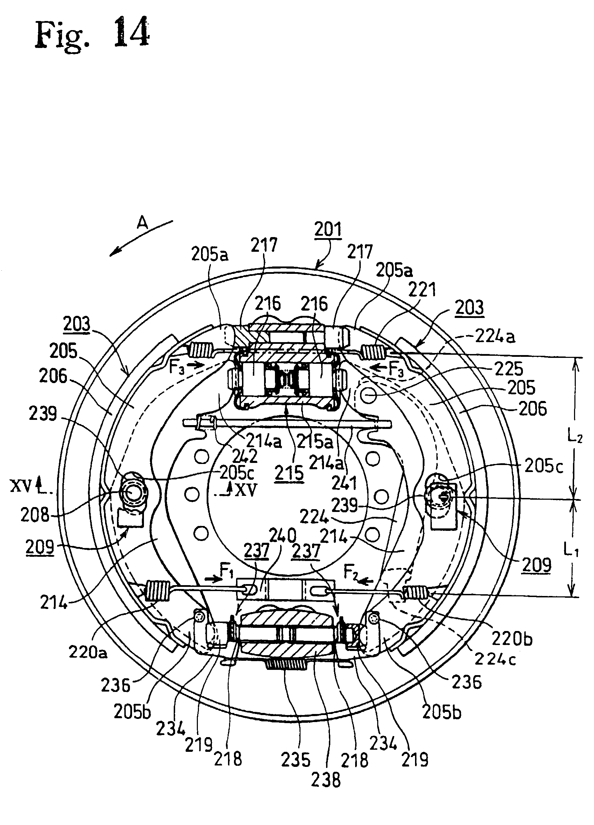

Figures 14-17 illustrate an embodiment suitable for a dual two leading type (D2L type hereinafter) drum brake device. In Embodiment 4, those components which are the same as in Embodiments 1-3 are identified with a 200-series of numbers, for which a detailed explanation is omitted here.

The drum brake device in the figures is for a left rear wheel, and the direction of arrow A in Figure 14 shows the direction that the brake drum, not shown in the diagram, is moving forward.

In the drum brake device of this Embodiment 4, devices such as the brake shoe 3 or 103 and the pivot lever 14 or 114 in the above-described Embodiments 1-3 are placed in the opposed location, and especially the link mechanism of the mechanical type actuator and the shoe clearance adjustment device to manually or automatically adjust the shoe clearance are differently located.

In the above-described Figure 14, the basic structure is bilaterally symmetric; thus, left half part is explained, then the identical reference numbers are used in the same and symmetric parts and the explanation of right half is omitted here.

The upper end 205a of the shoe web 205 of the brake shoe 203 is supported by the pin shaped first anchor 217 fixed on the cylinder body 215a of the both-side open type wheel cylinder 215, a fluid type actuator, and the lower end 205b is supported by the shoe clearance adjustment device 237 also functioning as the second anchor 210. In addition, the upper end 214a of the pivot lever 214 functionally engages with the piston 216 of the wheel cylinder 215, and the lower end 214b is supported by the above-described shoe clearance adjustment device 237 also functioning as the third anchor 211.

The shoe clearance adjustment device 237 also functioning as the second and third anchors 210, 211 comprise the adjustment body 238 fixed on the back plate 201, the adjustment bolt 218 screwed into the adjustment body 238, and the sleeve 219 fitted around the axle 218c of the adjustment bolt 218 so as to rotate relatively.

The automatic shoe clearance adjustment device 237 comprises the adjustment lever 234 with an almost L-shape, the stopper pin 236 vertically mounted on the shoe web 205, and the adjustment spring 235 extended between the adjustment levers 234, 234. The thread of right adjustment bolt 218 is inversely threaded relative to that of left adjustment bolt 218.

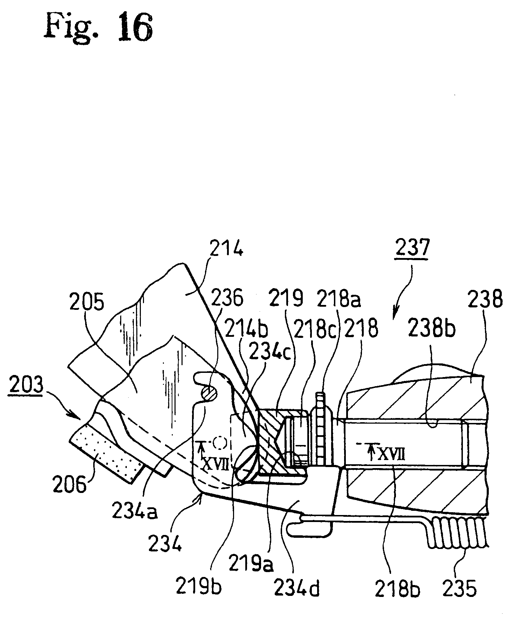

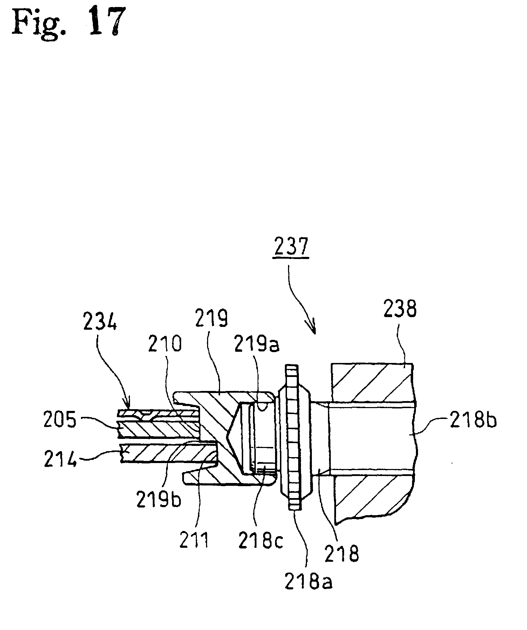

Figures 16 and 17 are enlarged views of left half of the shoe clearance adjustment device 237. The adjustment toothed wheel 218a is integrally formed at the central region of the adjustment bolt 218; the axle 218b of the adjustment bolt 218 is screwed into the female thread 238b of the adjustment body 238; and the other axle 218b is rotatably fitted in the blind hole 219a of the sleeve 219.

Further, the bottom of the stepped portion of the notched groove 219b of the sleeve 219 is formed in a plane surface which holds the shoe web 205 and adjustment lever 234, and the bottom of the groove is formed in an arc surface which holds the pivot lever 214. The bottom of the stepped portion of the notched groove supporting the shoe web 205 forms the floating anchor type second anchor 210, and the bottom of the groove supporting the pivot lever 214 forms the pivot anchor type third anchor 211.

As shown in Figure 16, the first arm 234a of the adjustment lever 234 with an almost L-shape is rotatably supported by the pin 236 fixed on the shoe web 205 as the fulcrum; the middle segment 234c of the adjustment lever 234 abuts against the bottom of the the stepped portion of notched groove 219b of the sleeve 219; and the second arm 234b engages with the adjustment toothed wheel 218a.

The adjustment spring 235 extends between both adjustment levers 234, 234. In Figure 14, at the left half of the adjustment lever 234, the adjustment spring 235 applies counter-clockwise spring force with the pin 236 as the fulcrum, and at the right half of the adjustment lever 234, it applies clockwise spring force with the pin 236 as the fulcrum.

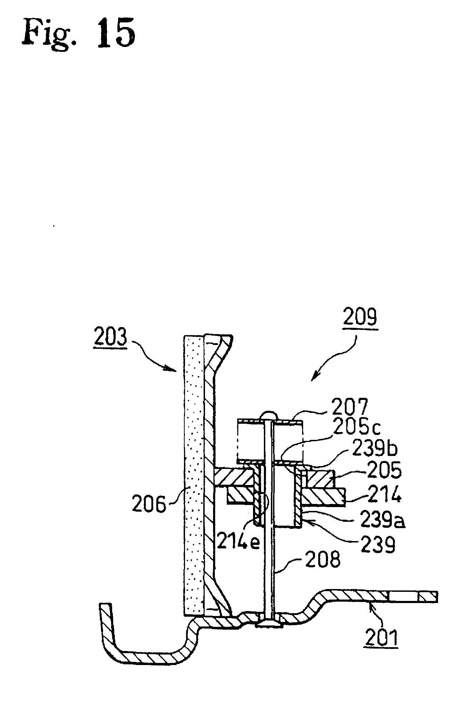

Further, as shown in Figure 15, as the pivot mechanism of the central region of the pivot lever 214 and the shoe web 205, the sleeve 239 with a flange provided instead of the components already explained in Embodiments 1-3. The pivot lever 214 pivotably mounted on the shoe web 205 so as to rotate and to move relatively.

The axle 239a of the sleeve 239 with flange is inserted through the long hole 205c formed at the shoe web 205 and the circular hole 214e formed at the pivot lever 214, and the flange portion 239b is held at the shoe web 205 by the shoe holding device 209.

In Figure 14, the first shoe return springs 220a, 220b extend between the respective brake shoes 203, 203 adjacent to the shoe clearance adjustment device 237 and the bracket 240 fixed on the back plate 201. In addition, the second shoe return spring 221 extends between the brake shoes 203, 203 adjacent to the wheel cylinder 215.

When

L1 = distance from the pivot point of the shoe web 205 and the pivot lever 214 to the first shoe return springs 220a, 220b;

L2 = distance from the pivot point of the shoe web 205 and the pivot lever 214 to the second shoe return spring 221;

F1 = mounted load of the first return spring 220a;

F2 = mounted load of the first return spring 220b; and

F3 = mounted load of the second return spring 221, the moment acting on the respective brake shoes 203, 203 is set to satisfy the following formula.

That is, the moment acting on the left side of the brake shoe 203 is to be $F1 \times L1 > F3 \times L2$, and the right side of the brake shoe 203 is to be $F2 \times L1 < F3 \times L2$. The reason for this setting is as explained in Embodiment 1.

The link mechanism as the mechanical type actuator is explained with reference to Figure 14. The link mechanism comprises the brake lever 224 and the strut 241, etc., and the end portion 224a of the brake lever 224 is rotatably supported at the upper end 214a of the right pivot lever 214 by the pin 225 as the fulcrum, and the U-shaped groove 224c of the free end is connected to a control cable, not shown in the diagram.

The strut 241 extends between the left pivot lever 214 and the brake lever 224, and a slight clearance is to be created between the left pivot lever 214 and the strut 241 by the spring force of the anti-rattle spring 242 installed at the strut 241 when the back surface of the brake lever 224 abuts against the sleeve 239 with the flange.

[Braking Operation]

In Figure 14, both pistons 216, 216 open the upper ends 214a, 214a of right and left pivot levers 214, 214 when in the service brake operation.

In addition, when the parking brake is in operation, the U-shaped groove 224c portion of the brake lever 224 is pulled by a parking brake cable, not shown in the diagram, and the brake lever 224 rotates clockwise with the pin 225 as the fulcrum to open the upper end 214a of left pivot lever 214 via the strut 241. Then, the brake lever 224 rotates clockwise at the point of abutment with the strut 241 as the fulcrum to open the upper end 214a of right pivot lever 214 via the pin 225.

When either service brake or parking brake are in operation, the operation force of the pivot lever 214 is transferred to the brake shoe 203 via the sleeve 239 with flange to frictionally engage with the brake drum, not shown in the diagram. At this time, the lower end 205b of the left brake shoe 203 always abuts against the second anchor 210 and the upper end 205a of the fight brake shoe 203 always abuts against the first anchor 217 because of the moment difference operating on the respective brake shoes 203, 203 by the first and the second shoe return springs 220a, 220b, 221.

Accordingly, in Figure 14, since the brake drum, not shown in the diagram, is rotating in the direction of arrow A when moving forward, both brake shoes 203, 203, as explained in the previous embodiments, functions as a leading shoe. On the other hand, when the brake drum, not shown in the diagram, is rotating in the opposite direction of arrow A, left brake shoe 203 is supported by the first anchor 217 and right brake shoe 203 is supported by the second anchor 210 to function as a leading shoes, thereby creating a dual two leading (D2L) type braking effect either when the service brake in operation or the parking brake in operation.

The brake shoes 203, 203, each may alone move in the direction of the brake drum rotation while in the braking operation; therefore, effects as the above-described embodiments is evidently obtained.

[Automatic Shoe Clearance Adjustment Operation]

When in the service brake operation in Figure 14, if the lining 206 wears out and if the brake drum, not shown in the diagram, is rotating in the direction of arrow A, right adjustment lever 234 rotates clockwise with the pin 236 as the fulcrum, and the adjustment toothed wheel 218a is rotated to one pitch to be screwed out from the adjustment body 238, thereby automatically adjusting the clearance between the brake drum, not shown in the diagram, and the lining 206.

In addition, the brake drum, not shown in the diagram, is rotating in the reverse direction, left adjustment lever 234 rotates counter-clockwise with the pin 236 as the fulcrum to automatically adjust the shoe clearance as described above.

However, automatic adjustment operation is not limited to the type operating when in braking operation, and the type operating when releasing the brake may be easily employed.

Effect of the Invention

This invention has the following effects:

〈A〉 If the brake shoe and the pivot lever are simply rotatably pivoted, the brake shoe moves in the direction of the brake drum rotation against the operation force of the actuator while in braking operation when in either moving forward or backward. Not sufficient braking force is expected under this condition, and this decreases the braking effectiveness.

In this invention, the brake shoe and the pivot lever are pivoted so as to move relatively in the direction of the brake drum rotation. Further, the pivot lever is supported by the pivot anchor type. Therefore, the brake shoe individually smoothly moves in the rotational direction of the brake drum, thereby maintaining the sufficient and stable braking force either when in moving forward or in moving backward.

〈B〉 Even if the service brake is used to stop the vehicle on a slope and the brake shoe moves to be supported by the other anchor, the brake shoe moves individually regardless of the pivot lever, and the pedal stroke is unchangeable, thereby preventing from worsening the pedal action feeling.

〈C〉 The drum brake device of this invention has a simple structure in that the long hole and the hollow protuberance are formed on the shoe web of the brake shoe or pivot lever to be simply fitted, thereby facilitating the processing and the assembly.

〈D〉 A hard material is placed between the pivot point of the hollow protuberance and the long hole or is placed on exterior of the hollow protuberance. Accordingly, frictional resistance caused by sliding action between the brake shoe and the pivot lever is maintained low for a long period of time, and the durability is improved by preventing the wearing and/or the permanent set and/or the like.

〈E〉 This invention may be applicable to the type which comprises a single brake shoe and a single pivot lever, the type which comprises a pair of brake shoes and pivot levers, and what not. Thus, this invention may widely be used in a variety of types.

〈K〉 The moment of the shoe return spring acting on the brake shoe with the pivot point of the pivot lever and the brake shoe as the fulcrum is so designed that the rotation-entry side of the brake shoe relative to the direction of forwarding brake drum, which is overwhelmingly more frequent, may open first. This offers a superior strength by preventing the impact load against the anchor and eliminates the concern of creating the impact noise.

It is readily apparent that the above-described has the advantage of wide commercial utility. It should be understood that the specific form of the invention hereinabove described is intended to be representative only, as certain modifications within the scope of these teachings may be apparent to those skilled in the art.

Accordingly, reference should be made to the following claims in determining the full scope of the invention.

Claims

1. A drum brake device comprising,

a back plate,
the first, second, and third anchors mounted on said back plate,
a brake shoe, one end of which supported by one of the first or second anchor, the other end of which supported by the remaining first or second anchor,
an actuator provided adjacent to said first anchor, and
a pivot lever, the central region of which is rotatably supported at the central region of said brake shoe, one end of which functionally engages with said actuator, the other end of which supported by the third anchor, so that the operation force of said actuator may be transferred to said brake shoe via the pivot point of said pivot lever, wherein

the other end of said pivot lever is supported by a pivot type anchor, and

said brake shoe is pivotably supported on said pivot lever so as to be movable along the direction of brake drum rotation.

2. A drum brake device as claimed in Claim 1, wherein

said brake shoe is a single shoe and said pivot lever is a single lever.

3. A drum brake device as claimed in Claim 1, wherein

a pair of brake shoes is facing each other, and a pair of pivot levers, each is pivoted with said each brake shoe.

4. A drum brake device as claimed in one of Claims 1-3, wherein

said actuator is a fluid type.

5. A drum brake device as claimed in one of Claims 1-3, wherein

said actuator is a mechanical type.

6. A drum brake device as claimed in one of Claims 1-3, wherein

said actuator is a dual type having both fluid and mechanical types.

7. A drum brake device as claimed in Claim 1, 2, or 4, wherein

said actuator is a one-side open type wheel cylinder.

8. A drum brake device as claimed in Claim 1, 3, or 4, wherein

said actuator is a both-side open type wheel cylinder.

9. A drum brake device as claimed in one of Claims 1-8, wherein

a protuberance is formed on one of a shoe web of said brake shoe or said pivot lever superimposed with said brake shoe and is to be protruding toward the other,
a long hole is formed along the direction of brake drum rotation on said other or said pivot lever, and
a mechanism for transferring the operation force of said actuator to said brake shoe via said pivot point consisting of said actuator, is transferred via the pivot point of said protuberance and said long hole.

10. A drum brake device as claimed in either Claim 9, wherein

said protuberance functioning as said mechanism for transferring said operation force of said actuator to said brake shoe is a hollow protuberance and a shoe hold pin functioning as a shoe hole mechanism is freely inlayed in a hollow of said hollow protuberance.

11. A drum brake device as claimed in either 9 or 10, wherein

a hard spacer is provided on the force transferring surface of brake shoe of said mechanism for transferring said operation force of said actuator to said brake shoe.

12. A drum brake device as claimed in one of Claims 9-11, wherein

a rotatable roller is provided around said protuberance of mechanism for transferring said operation force of said actuator to said brake shoe.

13. A drum brake device as claimed in one of Claims 1-12, wherein

either said first anchor or second anchor functions as a shoe clearance adjustment device to adjust the clearance between said brake drum and said brake shoe.

14. A drum brake device as claimed in Claim 13, wherein

said shoe clearance adjustment device comprises an automatic shoe clearance adjustment device which senses the amount of opening of said brake shoe to automatically adjust said clearance.

15. A drum brake device as claimed in Claims 1-14, wherein

the moment of said shoe return spring acting on said brake shoe with the pivot point of said brake shoe and said pivot lever as the fulcrum, is so designed that the rotation-entry side of said brake shoe opens first relative to the forwarding direction of said brake drum.

# Fig. 1

# Fig. 2

# Fig. 3

# Fig. 4

# Fig. 5

## Fig. 6

EP 0 964 177 A2

# Fig. 7

EP 0 964 177 A2

Fig. 8

EP 0 964 177 A2

Fig. 9

## Fig. 10

# Fig. 11

Fig. 12

# Fig. 13

Fig. 14

# Fig. 15

## Fig. 16

# Fig. 17